Europäisches Patentamt

European Patent Office

Office européen des brevets

(11) Publication number: **0 570 631 A1**

# EUROPEAN PATENT APPLICATION

(21) Application number: **92201437.8**

(51) Int. Cl.5: **A21D 2/16**

(22) Date of filing: **21.05.92**

(43) Date of publication of application:
**24.11.93 Bulletin 93/47**

(84) Designated Contracting States:
**NL**

(71) Applicant: **UNILEVER N.V.**
**Weena 455**
**NL-3013 AL Rotterdam(NL)**

(72) Inventor: **Heertje, Isaac Unilever Research**
**Laboratory**
**Olivier van Noortlaan 120**
**NL-3133 AT Vlaardingen(NL)**
Inventor: **Holscher, Ebo Jan Unilever**
**Research Laboratory**
**Olivier van Noortlaan 120**
**NL-3133 AT Vlaardingen(NL)**
Inventor: **The other inventors have agreed to**
**waive their entitlement to designation**

(74) Representative: **Joppe, Hermina L. P. et al**
**Unilever N.V.**
**Patent Division**
**P.O. Box 137**
**NL-3130 AC Vlaardingen (NL)**

(54) **Bread dough and bread obtained therefrom.**

(57) Bread doughs comprising from 2- 20 wt% of mesomorphic phase of edible surfactants, said surfactants being a mixture of monoglyceride materials and co-surfactant materials in a weight ratio of 30 : 1 to 2 : 1.

EP 0 570 631 A1

The present invention relates to bread dough and baked or parbaked products obtained therefrom. In particular to bread doughs containing mesomorphic phases of edible surfactants.

According to the general prior art it is well-known to use edible surfactants in bread doughs. In particular it is known to use monoglyceride edible surfactants in dough. For some applications it has been suggested to use monoglyceride materials in their hydrated form, for example US 3,379,539 discloses monoglyceride/water hydrates which may be used in starch doughs. In The Lipid handbook, by Gunstone c.s it has been disclosed at page 227 that hydrates of monoglycerides can be used in the baking industry as crumb-softening agents in wheat bread. US 4,424,237 describes a mixture of various esters of fatty acids and polyols in hydrated form as a partial or complete replacement for shortening in flour based baked goods. N. Krog and B. Nybo Jensen in J. Fd. Technol (1970) 5, 77-87 describe the interaction of monoglycerides in different physical states and their anti-firming effects in bread. GB 1,346,581 describes the preparation of bread using a dispersion of monoglycerides prepared at elevated temperatures.

It is the object of the invention to provide bread doughs which can be used for the preparation of bread products which are microwaveable. In this respect the term microwaveability refers to two aspects: firstly the possiblity to produce upon microwaving a bread product which is crisp at the outside and soft at the inside and secondly this good product quality is not too much sensitive to variations on heating time. The second aspect is often referred to as "microwave tolerance". Applicants are of the opinion that bread doughs which contain monoglycerides as the only surfactant generally do not exhibit satisfactory microwaveability.

Surprisingly it has now been found that the desired microwaveability can be achieved if bread doughs contain a mesomorphic phase of edible surfactants, said mesomorphic phase comprising monoglyceride materials and other edible surfactant materials in a specific weight ratio. Surprisingly it has also been found that these specific combinations of surfactants provides doughs that can easily be handled in an industrial dough processing line, even at relatively high water levels of the dough, as compared to the same dough composition wherein the surfactants are not present in a mesomorphic phase.

Accordingly the present invention relates to bread doughs comprising from 2- 20 wt% of a mesomorphic phase of edible surfactants, said surfactants being a mixture of monoglyceride materials and co-surfactant materials in a weight ratio of 30 : 1 to 2 : 1.

For the purpose of the invention the term mesomorphic phase is intended to include all semi-ordered phases of water and structuring materials. Mesomorphic phases and their method of preparation are known to food scientists. In the "Lipid Handbook" of Gunstone, Harwood and Padley (Chapman and Hall, 1986) such phases are mentioned at page 227. Further detail may be found in "Food emulsions" of S. Friberg (Marcel Decker, 1976 at page 82). Such mesomorphic phases may advantageously be formed by heating a mixture containing the edible surfactant materials and water to a temperature above the Krafft temperature, followed by cooling.

Examples of such phases are cubic, hexagonal, alpha crystalline gel, beta-crystalline coagel and lamellar phases.

Bread doughs according to the present invention comprise from 2- 20 wt% of a mesomorphic phase, whereby this percentage refers to the total weight of the water and the edible surfactants plus optional further components in said phase. The presence of such a phase may be detected by any method suitable for the detection of regular arrangements of structuring materials. Suitable methods include for example NMR, Electron microscopy, Differential scanning calorimetry, light microscopy and X-ray diffraction.

Any mixture of edible surfactants may be used provided a monoglyceride material is present, although lipidic substances are preferred. However, the use of other, non lipidic surfactants, for example surfactant or amphiphylic carbohydrates is not excluded. In general the preferred edible co-surfactants are selected from the group consisting of nonionic surfactants, anionic surfactants and cationic surfactants.

Suitable monoglyceride materials for use in accordance to the invention are esters of glycerol and one $C_{10-24}$ fatty acid.

Preferred nonionic co-surfactants are edible polyglycerol esters, non-ionic phospholipids, non-fatty carboxylic acid esters of fatty acid esters, partial sugar-fatty acid esters and, partial fatty acid esters of polyols and mixtures thereof. Especially preferred are lecithins as nonionic edible co-surfactants.

Preferred cationic co-surfactants are cationic phospholipids, cationic non-fatty carboxylic acid esters of fatty acid esters and mixtures thereof.

Preferred anionic co-surfactants are lactylated fatty acid salts, anionic phospholipids, anionic non-fatty carboxylic acid esters of fatty acid esters and their metal salts, fatty acids and their metal salts and mixtures thereof.

Preferred ionic edible co-surfactants are alkali metal salts of lactylated fatty acids, e.g. sodium stearoyl lactylate (SSL), citric acid esters, ionic phospholipids (phosphatidic acid (PA), succinated esters and diacetyl tartaric acid ester of monoglyceride (DATEM).

In a preferred embodiment of the invention the co-surfactants are selected from the group of lecithin, sodium stearoyl lactylate, diacetyl tartaric acid esters of monoglyceride, calcium stearoyl lactilate, glycerol lacto palmitate and mixtures thereof.

The fatty acid chains used in these surfactants can be of any type and origin. Preferably, however $C_{8-28}$ fatty acid chains are present, more preferred $C_{12-22}$, for example $C_{14-18}$. The fatty acids may for example be saturated, unsaturated, fractionated or hydrogenated and be derived from natural (for example dairy, vegetable or animal) source or synthetic sources.

Preferably the weight ratio of monoglycerides to co-surfactants in the mesomorphic phases is from 30 : 1 to 2 : 1, more preferred 20 : 1 to 5 : 1, most preferred 15 : 1 to 7 : 1.

The presence of "non-ionic", "cationic" and "anionic" surfactants is of course dependent on the pH-value of the foodstuff in which the surfactants are used. In this respect it should be noted that normally the pH for bread doughs is from 5-8.

Bread doughs of the invention will generally comprise in addition to the mesomorphic phase as described above ingredients which are normally present in bread. Example of such materials are flour, water, salt, leavening agents and further optional ingredients like bread-improvers, sugar and fat.

Preferably the level of flour in bread doughs of the invention is 40-80 wt% of the composition, generally 50-60 wt%.

Preferably the total level of water in the dough (including the water of the mesomorphic phase) is 20-40 wt% of the composition, generally 30-35 wt%. The level of salt is generally 1-3 wt%. Preferably yeast is used as the leavening agent, preferred levels are 1-10 wt%. Bread improvers are preferably incorporated at a level of 0-10 wt%, sugar at a level of 0-5 wt% and fat at a level of 0-15%, more preferred less than 5 %, most preferred less than 0.5 wt%.

In the preparation of bread doughs in accordance to the invention, the mesomorphic phase is preferably prepared before the addition of other ingredients, alternatively the mesomorphic phase may be prepared "in-situ" while other ingredients of the composition are present. In any case however, the formation of the mesomorphic phase, preferably involves the heating of the edible surfactants and water to a temperature above the Krafft temperature, therefore heat-sensitive ingredients or ingredients which could prevent the formation of said phase, should preferably be added after the formation of the mesomorphic phase.

In general the method for preparing bread doughs according to the invention involves the mixing of the edible surfactants and water to a temperature just above the Krafft-temperature of the system. Other ingredients, e.g. salt, colouring agents and flavouring ingredients can also be added. The pH can be set to the desired value using e.g. sodium hydroxide or lactic acid. This mixture is then stirred gently until the components are distributed homogeneously. Subsequently the mixture is cooled down, and used as an ingredient in the bread doughs.

After preparation bread doughs of the invention may either be stored (e.g. in chilled or frozen state) or frther processed into baked or parbaked bread products.

Therefore the invention also relates to baked or parbaked bread products obtained by using a bread doughs as described hereinabove. Particularly preferred are bread rolls.

The invention will be illustrated by means of the following examples.

**EXAMPLE 1**

Bread doughs were prepared of the following composition:

| Ingredient weight parts | reference | invention |
|---|---|---|
| wheat flour | 1000 | 1000 |
| fresh yeast | 50 | 50 |
| water | 520 | 460 |
| Bread improver* | 50 | 50 |
| salt | 20 | 20 |
| saccharose | 20 | 20 |
| glucose | 20 | 20 |
| lactose | 10 | 10 |
| calcium acetate | 3 | 3 |
| lactic acid | 1.25 | 1.25 |
| fat | --- 100 | --- |
| mesomorphic phase | --- | 100 |

* Bakti improver ex Bakkerol

The mesomorphic phases used had the following composition: water 93.4 wt%, monoglyceride (Hymono 8803 ex Quest Int.) 6 wt% and co-surfactant 0.6 wt%. The following co-surfactants were used:

SSL        sodium stearoyl lactylate Admul SSL 2012 ex Quest Int.
DATEM     diacetyl ester of tartaric acid monoglyceride, Datem 1952 ex Quest Int.
CSL        calcium stearoyl lactylate Admul CSL 2007 ex Quest Int.
LEC        lecithin Admul 2879 ex Quest Int.
GLP        glycerol lacto palmitate Admul GLP•2033 ex Quest Int.

The mesomorphic phase was prepared separately by mixing the ingredients in a water jacketed vessel under gently stirring at 60°C for 1 hour. The pH was set to 6.0 with lactic acid / NaOH. The product was then cooled to 15°C using a scraped surface heat exchanger operated at maximum speed of 1500 rpm at a throughout of 2 kg/h. The mesomorphic phase thus obtained was stored at 5°C until use.

The dough composition was prepared by mixing the ingredients followed by kneading for 15 minutes in a slow kneader (DIOSNA, position 2). The dough was left to rest for 10 minutes, divided in 60 g positions and moulded. The buns were proofed for 50 minutes at 30°C and 80% relative humidity, followed by baking for 10 minutes at 225°C in an electric oven with sole and top heating. The buns were cooled to room temperature and sealed into propylene bags. The buns were pasteurized inside the bags for 15 minutes at 120°C.

The resulting buns were stored for one day at ambient temperature. The quality was judged by a panel of 4 experts on a scale 0-10 (10 being the best). The first reference product (without fat) has a score of 6, the second reference product a score of 7. The products according to the invention has scores of 8 (SSL and DATA) or 7.5 (CSL, LEC, GLP). These results indicate that products according to the invention have a better quality than the reference products.

The bread volume of the first reference product was 3.8 ml/g, of the second reference product 3.7 ml/g, 4.4 for the SSL product, 4.6 for the DATA product, and 4.3 for the CSL, LEC ans GLP products. This again shows a better quality of products of the invention as compared to the reference products.

After storage for 3 weeks at ambient temperature the buns were cut and filled with a precooked hamburger. The snack was heated for 1 minute at 650 Watt in a microwave oven.

The first reference product obtained a score of 4.5, the second reference a score of 5. The remaining products containing mesomorphic phase scored between 6 and 7.

## EXAMPLE 2

Bread buns of the following compositions were made:

|  | A | B | C |
|---|---|---|---|
| wheat flour | 1000 | 1000 | 1000 |
| Fresh yeast | 70 | 70 | 70 |
| Water | 520 | 520 | 613 |
| Bakti pasta bread improver (ex Bakkerol) | 50 | 50 | 50 |
| salt | 10 | 10 | 10 |
| Calcium salt | 3 | 3 | 3 |
| Lactic acid | 2.5 | 2.5 | 2.5 |
| Mesomorphic phase | 100 | 100 | -- |
| Glycerol monostearate | -- | -- | 6 |
| Calium stearoyl lactilate | -- | -- | 0.6 |

Same preparation conditions as for example 1 but only 40 minutes proofing and baking for 7 minutes at 280°C.

The mesomorphic phase of compositions A and B contained 93.4 % water, 6wt % glycerolmonostearate and 0.6 calcium stearoyl lactylate (Admul CSL 2007). Mesomorphic phase A was prepared as in example 1, Mesomorphic phase B was prepared by handmixing the ingredients at 60°C until all ingredients were solubilised followed by cooling under shear.

The plain breads A, B and C had a comparable specific volume and texture. After three days of storage the breads were microwaved for 3 minutes at 650 Watt. Although products A, B and C were of similar crispness and softness, products A and B were considered better than product C with regards to toughness and perceived quality.

## EXAMPLE 3

Bread buns with the compositions as mentioned in table 1 were made.
Preperation conditions were as follows:
-   blend ingredients and knead during 15 minutes in Diosna position 2
-   scale dough into pieces of 60 gram
-   mould and proof for 15 minutes at 35°C with RF = 75%
-   knock down
-   mould and proof for 40 minutes at 35°C with RF = 75%
-   bake during 20 minutes at 230°C
-   pack into polypropylene pouch, flush with nitrogen gas, and store at ambient.

The samples were assessed after 2 and 5 days storage at ambient. The buns were wrapped into alumina coated susceptor sheet material, in a way to ensure as good as possible contact between susceptor and bread crust. The buns were reheated in microwave oven during 70 seconds at a power output of 650 Watt.

The reheated buns were left for 1 minute after microwaving and than assessed by a panel of experts. The results are summarized in table 2.

These results show that products containing a mesomorphic phase were more crisp and had a better overall quality than the reference procucts. Furthermore the products with the mesomorphic phase were less tough (crust and crumbs) than the reference products.

**TABLE 1**

| sample code | 1 | 2 | 3 | 4 | 5 | 6 |
|---|---|---|---|---|---|---|
| wheat flour | 1000 | 1000 | 1000 | 1000 | 1000 | 1000 |
| water | 630 | 630 | 630 | 630 | 630 | 630 |
| salt | 17 | 17 | 17 | 17 | 17 | 17 |
| fresh yeast | 70 | 70 | 70 | 70 | 70 | 70 |
| bread improver S500 ex Puratos | -- | 30 | -- | -- | -- | -- |
| bread improver volu-deb ex Unipro | -- | -- | 30 | -- | -- | -- |
| bread improver bakti-krokant ex Bakkerol | -- | -- | -- | 30 | -- | -- |
| shortening (biskien) | -- | -- | -- | -- | 100 | -- |
| mesomorphic phase (as in composition A of example 2) | -- | -- | -- | -- | -- | 200 |

Composition of bread buns

**TABLE 2**

| | | | | | | |
|---|---|---|---|---|---|---|
| *) crispness of crust | 6/6 | 7/5 | 7/6 | 7/6 | 6/6 | 8/8 |
| *) thougness of crust | 3/6 | 3/5 | 3/3 | 3/4 | 4/4 | 1/1 |
| *) thougness of crumb | 9/9 | 8/8 | 8/8 | 8/8 | 8/8 | 2/2 |
| *) perceived quality | 4/3 | 5/5 | 5/4 | 5/4 | 5/5 | 7/7 |

assessment of bread buns after microwaving

1 = very low

10 = very high

*) storage 2 days/5 days

## Claims

1. Bread doughs comprising from 2- 20 wt% of mesomorphic phase of edible surfactants, said surfactants being a mixture of monoglyceride materials and co-surfactant materials in a weight ratio of 30 : 1 to 2 : 1.

2. Bread doughs according to claim 1, wherein the co-surfactants are selected from the group of lecithin, sodium stearoyl lactylate, diacetyl tartaric acid esters of monoglycerides, calcium stearoyl lactilate, glycerol lacto palmitate and mixtures thereof.

3. Bread doughs according to claim 1, comprising
   40-80 wt% of flour
   20-40 wt% of water
   1-10 wt% of leavening agents
   1- 3 wt% of salt

4. Baked or parbaked bread obtained from a bread dough of claim 1.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 063 468 (C. J. PATTERSON COMPANY)<br>* claims; example 8 *<br>* page 8, line 25 *<br>* page 8, line 29 - page 9, line 1 *<br>--- | 1-4 | A21D2/16 |
| X | US-A-3 180 736 (B. W. LANDFRIED)<br>* claims; examples *<br>--- | 1-4 | |
| X | FR-A-1 354 142 (ARMOUR AND COMPANY)<br>* page 1, column 1, paragraph 3 - page 2, column 1, paragraph 3 *<br>* page 2, column 2, paragraph 3; example 2 *<br>--- | 1-4 | |
| X | FR-A-2 269 368 (UNILEVER N.V.)<br>* claims 1,10-12 *<br>* page 2, line 15 - line 23 *<br>* page 3, line 19 - line 26 *<br>* page 4 *<br>--- | 1,3,4 | |
| X | BAKER'S DIGEST<br>vol. 52, no. 1, February 1978, PONTIAC, ILLINOIS US<br>pages 30 - 38<br>H. BIRNBAUM 'SURFACTANTS AND SHORTENINGS IN CAKEMAKING'<br>* page 35, column 1, paragraph 5 - column 3, paragraph 3 *<br>--- | 1-4 | **TECHNICAL FIELDS SEARCHED (Int. Cl.5)**<br><br>A21D |
| X | US-A-3 592 660 (G. D. NEU)<br>* claims; example 2 *<br>* column 3, line 3 - line 8 *<br>--- | 1,3,4 | |
| X | US-A-3 282 705 (F. F. HANSEN)<br>* claims; example 2 *<br>--- | 1-4 | |
| | -/-- | | |

The present search report has been drawn up for all claims

| Place of search | Date of completion of the search | Examiner |
|---|---|---|
| THE HAGUE | 03 FEBRUARY 1993 | COUCKE A.O.M. |

EPO FORM 1503 03.82 (P0401)

European Patent
Office

EUROPEAN SEARCH REPORT

Application Number

EP    92 20 1437
Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-1 104 955 (EASTMAN KODAK COMPANY) <br> * page 1, line 55 - line 24; claims * <br> * page 2, line 123 - page 3, line 59 * <br> * page 3, line 79 - line 96 * <br> --- | 1-4 | |
| X | US-A-3 502 482 (H. BIRNBAUM) <br> * column 1, line 71 - column 2, line 8 * <br> ----- | 1-4 | |

TECHNICAL FIELDS
SEARCHED (Int. Cl.5)

The present search report has been drawn up for all claims

| Place of search | Date of completion of the search | Examiner |
|---|---|---|
| THE HAGUE | 03 FEBRUARY 1993 | COUCKE A.O.M. |

EPO FORM 1503 03.82 (P0401)